# FASCICULE DE BREVET EUROPEEN

(11) **EP 1 872 552 B1**
(45) Date de publication et mention de la délivrance du brevet: **05.12.2012**
(21) Numéro de dépôt: 06726179.2
(22) Date de dépôt: 04.04.2006
(51) Int. Cl.: H04L 29/00, G06F 17/00

(54) **PROCEDE D'ALERTE LORS D'UNE MODIFICATION DE CONTENU ET SYSTEME POUR LA MISE EN OEUVRE DU PROCEDE**
WARNVERFAHREN WÄHREND INHALTSMODIFIKATION UND SYSTEM DAFÜR
WARNING METHOD DURING CONTENT MODIFICATION AND SYSTEM THEREFOR

(30) Priorité: 19.04.2005 FR 0503922
(43) Date de publication de la demande: 02.01.2008
(73) Titulaire: France Télécom, 75015 Paris (FR)
(72) Inventeur: CASTAIGNET, Laurent, F-75015 Paris (FR); MOUDENC, Thierry, F-22700 Perros-Guirec (FR)
(74) Mandataire: Cabinet Plasseraud
(86) Numéro de dépôt international: PCT/FR2006/000737
(87) Numéro de publication internationale: WO 2006/111625

(56) Documents cités:
- WO-A-02/07013
- WO-A-02/17205
- US-A1- 2003 004 880

## Description

La présente invention concerne un mécanisme d'alerte lors d'une modification d'un contenu informatif dans un système de communication.

On assiste actuellement à une popularisation et une diffusion croissantes des technologies dites de "syndication de contenu" parmi lesquelles on trouve par exemple les standards RSS ("Really Simple Syndication") et Atom. Ces deux dialectes XML ("eXtensible Markup Language") permettent la description structurée du contenu d'un site Web en termes d'articles, en incluant notamment des éléments tels que titre, description et lien hypertexte vers le texte intégral. Dans la suite, la technologie RSS sera plus particulièrement envisagée, bien que l'exposé soit entièrement transposable à la technologie Atom ainsi qu'à toute autre technologie de syndication de contenu.

Les applications des technologies de syndication de contenu vont notamment du référencement de contenu depuis un site vers un autre à l'agrégation du contenu de différents sites depuis un logiciel lecteur spécialisé ("lecteur RSS" par exemple). Très populaires dans le contexte des journaux Web personnels ("weblogs"), ces technologies trouvent également un champ d'application naturel dans le domaine de la publication d'actualités en ligne.

Actuellement, les lecteurs RSS fonctionnent en mode de scrutation (ou "polling"). Ainsi, pour une source d'information RSS donnée ("feed RSS"), une requête HTTP ("Hypertext Transport Protocol") est périodiquement émise depuis chaque client intéressé vers un serveur RSS cible sur lequel la source est stockée, par l'intermédiaire d'un réseau de communication, afin d'obtenir des indications sur une éventuelle mise à jour de la source. Le lecteur applique une stratégie locale d'affichage en fonction des informations qui lui sont ainsi parvenues, et éventuellement de l'historique des consultations par l'utilisateur du lecteur (style grisé pour les articles déjà lus, par exemple).

De par les requêtes HTTP périodiquement émises, ce mode de fonctionnement impose une charge inutile à la fois au client, au serveur et au réseau lui-même. Cet état de fait amène d'ailleurs la plupart des serveurs hébergeant une source de données RSS à limiter le rythme des mises à jours de cette source, ce qui contrevient au caractère dynamique attendu, par exemple dans le cas d'un site d'actualités en ligne.

De plus, la mobilité personnelle n'est pas supportée dans ce modèle. En effet, la réception d'informations est conditionnée par la disponibilité d'un lecteur RSS sur le terminal utilisé, ce qui exclut un grand nombre de terminaux. Ainsi, une personne peut très bien être avertie des mises à jour d'un contenu lorsqu'elle utilise un terminal muni d'un lecteur RSS, mais ne plus l'être lorsqu'elle utilise un autre terminal.

Un autre problème posé par les mécanismes connus de consultation et d'alerte utilisant des technologies de syndication de contenu est qu'ils ne sont pas toujours compatibles avec les propriétés élémentaires des réseaux de communication dans lesquels ils s'inscrivent.

En particulier, les réseaux supportant le protocole d'initiation de session et de notification SIP ("Session Initiation Protocol") comme certains réseaux VoIP (Voix sur IP) ont émergé sous l'impulsion de groupes de standardisation tels que l'IETF ("Internet Engineering Task Force") ou le 3GPP ("3rd Generation Partnership Project") et sont sur le point d'être déployés largement. Ces réseaux supportent des services de base tels que les communications interpersonnelles classiques (appels audio et vidéo, diffusion de media...), les notions de mobilité personnelle, de présence et de disponibilité, etc. Or, il n'existe actuellement aucun mécanisme pour mettre en oeuvre un service d'alerte permis par les technologies de syndication de contenu sur de tels réseaux SIP, qui soit compatible avec les propriétés élémentaires offertes par ce type de réseaux.

Des propositions ont tenté d'améliorer la situation, sans toutefois surmonter l'ensemble des inconvénients mentionnés ci-dessus. Par exemple, la dernière version de la technologie RSS, à savoir RSS 2.0, offre la possibilité d'un fonctionnement en mode de distribution sélective ("push"), reposant sur un mécanisme d'abonnement et de notification (XML-RPC ou SOAP). Cette solution permet d'alléger la charge réseau et de bénéficier immédiatement d'une mise à jour intervenue sur une source RSS. Elle présente néanmoins un certain nombre d'inconvénients, parmi lesquels l'incapacité à traverser les dispositifs pare-feux ("firewalls") et les traducteurs d'adresses de réseau (NAT : "Network Address Translators") largement répandus dans les réseaux de données. Par ailleurs, elle ne supporte pas la mobilité personnelle.

Le document WO 02/07013 décrit également un système de modification de contenu.

Un but de la présente invention est de réduire les inconvénients des techniques connues.

En particulier, un but de l'invention est de proposer un mécanisme d'alerte relatif à une technologie de syndication de contenu dans un système de communication supportant un protocole d'initiation de session et de notification.

L'invention propose ainsi un procédé pour alerter un utilisateur muni d'au moins un terminal lors d'une modification d'un contenu conforme à une technologie de syndication de contenu dans un système de communication supportant un protocole d'initiation de session et de notification et incluant un serveur d'alertes et un serveur de contenu. Ce procédé comprend les étapes suivantes :
- transmettre, depuis un terminal de l'utilisateur vers le serveur d'alertes, un message de souscription dudit protocole, ledit message de souscription identifiant un contenu conforme à ladite technologie de syndication de contenu stocké sur le serveur de contenu ;
- recevoir au serveur d'alertes, depuis le serveur de contenu, une indication relative à une modification dudit contenu ; et
- transmettre un message de notification dudit protocole audit utilisateur, depuis le serveur d'alertes, lorsque le serveur d'alertes a reçu une indication relative à une modification dudit contenu.

L'utilisation de messages de souscription et de notification du protocole d'initiation de session et de notification permet d'alerter l'utilisateur des mises à jour du contenu conforme à ladite technologie de syndication.

En outre, elle rend compatible l'alerte relative au contenu selon ladite technologie de syndication de contenu aux principes élémentaires du système de communication supportant le protocole d'initiation de session et de notification. Cela permet notamment de mettre en oeuvre le mécanisme d'alerte tout en bénéficiant de la mobilité personnelle et des notions de présence et de disponibilité telles que prévues dans le protocole d'initiation de session et de notification.

De plus, un tel procédé permet de n'alerter l'utilisateur que lorsque cela est nécessaire, c'est-à-dire lors des modifications du contenu qui l'intéressent. On évite ainsi les problèmes de charge mentionnés en introduction, au moins entre l'utilisateur et le serveur d'alertes. L'utilisateur est cependant informé de toutes les mises à jour du contenu, ce qui respecte le caractère dynamique attendu pour certaines sources de données.

Avantageusement, le message de notification est transmis à l'utilisateur par l'intermédiaire de l'un au moins de ses terminaux, la transmission étant adaptée aux capacités de ce ou ces terminaux, selon par exemple que le terminal supporte ou non la notion de paquetage événementiel ("Event Package") du protocole SIP.

L'invention propose en outre un système de communication supportant un protocole d'initiation de session et de notification, comprenant un serveur d'alertes apte à communiquer avec au moins un utilisateur muni d'au moins un terminal et un serveur de contenu apte à stocker au moins un contenu conforme à une technologie de syndication de contenu. Le système de communication comprend en outre :
- des moyens pour recevoir au serveur d'alertes, depuis un terminal de l'utilisateur, un message de souscription dudit protocole, ledit message de souscription identifiant un contenu conforme à ladite technologie de syndication de contenu stocké sur le serveur de contenu ;
- des moyens pour recevoir au serveur d'alertes, depuis le serveur de contenu, une indication relative à une modification dudit contenu ; et
- des moyens pour transmettre un message de notification dudit protocole audit utilisateur, depuis le serveur d'alertes, lorsque le serveur d'alertes a reçu une indication relative à une modification dudit contenu.

L'invention propose en outre un serveur d'alerte supportant un protocole d'initiation de session et de notification comprenant :
- des moyens pour recevoir depuis un terminal d'un utilisateur, un message de souscription dudit protocole, ledit message de souscription identifiant un contenu conforme à une technologie de syndication de contenu stocké sur un serveur de contenu ;
- des moyens pour recevoir depuis le serveur de contenu, une indication relative à une modification dudit contenu ; et
- des moyens pour transmettre un message de notification dudit protocole audit utilisateur lorsque ledit serveur d'alertes a reçu une indication relative à une modification dudit contenu.

L'invention propose en outre un programme d'ordinateur apte à être mis en oeuvre sur un serveur d'alertes, ledit programme d'ordinateur comprenant des instructions de code, qui, lorsqu'il est effectué sur ledit serveur d'alertes, réalise les étapes suivantes:
- recevoir depuis un terminal d'un utilisateur, un message de souscription dudit protocole, ledit message de souscription identifiant un contenu conforme à une technologie de syndication de contenu stocké sur un serveur de contenu ;
- recevoir depuis le serveur de contenu, une indication relative à une modification dudit contenu ; et
- transmettre un message de notification dudit protocole audit utilisateur lorsque ledit serveur d'alertes a reçu une indication relative à une modification dudit contenu.

D'autres particularités et avantages de la présente invention apparaîtront dans la description ci-après d'exemples de réalisation non limitatifs, en référence aux dessins annexés, dans lesquels :
- la figure 1 est un schéma d'architecture simplifiée d'un système de communication dans lequel l'invention peut être mise en oeuvre ; et
- la figure 2 est un schéma montrant un échange de flux de messages conformément à un mode de réalisation de l'invention.

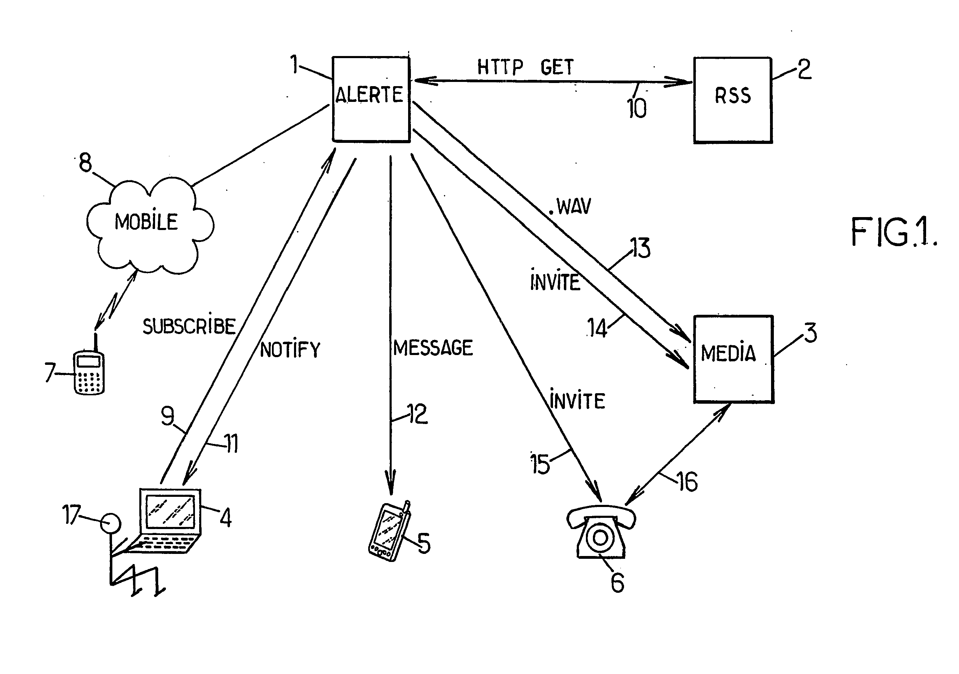

La figure 1 montre un système de communication comprenant un serveur d'alertes 1 et un serveur de contenu RSS 2. Ce système est par exemple un réseau VoIP. Il supporte le protocole d'initiation de session et de notification SIP tel que défini dans la recommandation RFC 3261 publiée en juin 2002 par l'IETF.

Dans cet exemple, le serveur 2 contient des sources de contenu conforme à la technologie RSS. Toutefois, un serveur de contenu selon la technologie Atom ou toute autre technologie de syndication de contenu pourrait également être envisagé.

Le serveur d'alertes 1 est apte à communiquer avec le serveur de contenu RSS 2, comme cela sera détaillé par la suite. En outre, un utilisateur 17 peut communiquer avec le serveur d'alertes 1 du système de communication, en vue notamment d'être alerté lors d'une modification d'un certain contenu RSS stocké sur le serveur 2.

A cet effet, l'utilisateur 17 est muni d'un terminal qui peut être de différents types. Par exemple, le terminal peut être un ordinateur 4 ayant des moyens pour communiquer avec le système de communication, par exemple via une connexion Internet classique. Il peut également s'agir d'un assistant personnel 5 de type PDA ("Personal Digital Assistant"), d'un téléphone filaire classique 6 ou d'un téléphone mobile 7. Dans ce dernier cas, l'utilisateur 17 communique avec le serveur d'alertes 1 par l'intermédiaire de moyens de communication adéquats, notamment un réseau mobile 8 d'accès radio, par exemple selon la technologie GSM ("Global System for Mobile communications"), GPRS ("General Packet Radio Service") ou UMTS ("Universal Mobile Telecommunications System").

Le terminal dont est muni l'utilisateur 17 possède un client SIP de façon à pouvoir fonctionner en cohérence avec le système de communication qui est un réseau SIP. De façon avantageuse, il possède en outre un lecteur RSS, éventuellement intégré au client SIP, qui lui permet d'exploiter le contenu RSS qui lui parvient du serveur 2 comme cela sera détaillé par la suite.

Le protocole SIP offre un mécanisme événementiel générique qui peut être spécialisé pour un besoin spécifique et dont la présente invention tire profit. Ce mécanisme est détaillé dans la recommandation RFC 3265, "Session Initiation Protocol (SIP) - Specific Event Notification", publiée en juin 2002 par l'IETF. Il définit notamment la notion de paquetage événementiel ("Event Package" selon la terminologie définie dans la RFC 3265) qui correspond à un ensemble d'informations d'état à reporter par un notifiant ("notifier") à un souscripteur ("subscriber"). Le paquetage événementiel utilise en outre une syntaxe et une sémantique spécifiques pour la transmission des informations d'état (voir notamment section 2 de la RFC 3265 précitée).

Selon l'invention, un paquetage événementiel est utilisé pour souscrire à un flux RSS donné et être informé d'une modification du contenu référencé par ce flux. Ainsi dans l'exemple illustré sur la figure 1, l'utilisateur 17 peut souscrire à un flux RSS stocké sur le serveur de contenu RSS 2.

A cet effet, l'utilisateur 17 transmet un message 9 de souscription (SUBSCRIBE) conforme à la RFC 3265 précitée, à partir de son terminal 4 et à destination du serveur d'alertes 1. Ce message contient notamment un ou plusieurs identifiants URI ("Uniform Resource Identifier ") pointant vers le flux RSS auquel l'utilisateur souhaite souscrire.

Le serveur d'alertes 1 est responsable de l'interrogation du serveur RSS cible 2. La relation entre le serveur d'alertes 1 et le serveur de contenu RSS 2 peut prendre différentes formes selon les contraintes de charge du réseau et les capacités des serveurs. A titre d'exemple, le serveur d'alertes 1 peut interroger le serveur RSS 2 à l'aide d'un message GET HTTP, c'est-à-dire un message du protocole HTTP incluant le ou les identifiants URI pointant vers le flux RSS visé. Dans ce cas, le serveur RSS 2 renvoie le contenu RSS souhaité mis à jour au serveur d'alertes 1, selon le même mode (message 10 sur la figure 1). Bien sûr, d'autres modes d'échange entre les serveurs 1 et 2 sont également possibles pour obtenir les informations de mise à jour au serveur d'alertes 1 (conditional GET, XML-RPC par exemple tel que spécifié par la norme RSS 2.0, etc.).

En réponse à la souscription et chaque fois que le flux visé par la souscription est mis à jour, un message 11 de notification (NOTIFY) conforme à la RFC 3265 précitée transmet à l'utilisateur 17 tout ou partie du contenu mis à jour. L'utilisateur 17 peut alors exploiter le contenu mis à jour, notamment lorsqu'il utilise un terminal 4 muni d'un lecteur RSS spécialisé.

On note que la notion de souscription est liée à un utilisateur du réseau SIP (désigné par un identifiant par exemple du type "sip:user@example.com") et non au terminal depuis lequel la souscription a été effectuée. Ceci permet en particulier d'exploiter les possibilités du protocole SIP en termes de mobilité personnelle (l'utilisateur pouvant utiliser différents terminaux), d'expression de la présence et de la disponibilité pour délivrer des notifications adaptées au contexte.

Le serveur d'alertes peut décider d'une stratégie de notification adaptée aux capacités du terminal cible, notamment si l'utilisateur en a changé depuis la souscription. Les capacités du terminal peuvent inclure les protocoles gérés tels que le protocole SIP ou une partie de SIP ou bien des protocoles de réseaux mobiles par exemple, les messages au sein de ce protocole (donc le sous-ensemble du protocole), les capacités média (audio, vidéo...), etc.

A titre illustratif, dans l'exemple représenté sur la figure 1, la notification effectuée par le serveur d'alertes 1 utilise le message NOTIFY 11 lorsque l'utilisateur 17 utilise l'ordinateur 4 comme terminal.

En revanche, si un assistant personnel 5 ne supportant pas la notion de paquetage événementiel d'alerte telle que définie dans la RFC 3265 est utilisé par l'utilisateur 17, la notification peut alors prendre la forme d'un message instantané 12 (MESSAGE) du protocole SIP.

De même, si un téléphone 6 ne supportant pas la notion de paquetage événementiel d'alerte de la RFC 3265 est utilisé par l'utilisateur 4, le serveur d'alertes 1 transmet avantageusement, sous forme vocalisée, le contenu qu'il a reçu du serveur de contenu RSS 2 à destination d'un serveur média 3. Ce contenu vocalisé consiste par exemple en un fichier son d'un format prédéterminé quelconque (par exemple .wav dans le message 13 de la figure 1). Le serveur d'alertes 1 transmet ensuite un message d'appel (INVITE) tel que défini dans la RFC 3261 précitée à chacun du serveur média 3 (message 13) et du téléphone 6 (message 15). En réponse à ces messages, le serveur média 3 diffuse le contenu vocalisé en synthèse vocale (référence 16), de façon à ce que le téléphone 6 puisse disposer du contenu mis à jour de façon adaptée à ses capacités.

Dans le cas particulier où l'utilisateur 17 est muni d'un terminal mobile 7, le mécanisme décrit ci-dessus s'applique. Cependant, les messages échangés entre le terminal 7 et le serveur d'alertes 1 transitent par le réseau mobile 8. Des passerelles appropriées sont alors utilisées pour assurer l'acheminement entre le réseau SIP pur et le réseau mobile 8. Parmi les possibilités envisageables, les messages peuvent être transmis sur le réseau 8 à l'aide de messages courts de type SMS ("Short Message Service") ou de pages envoyées en mode "WAP push".

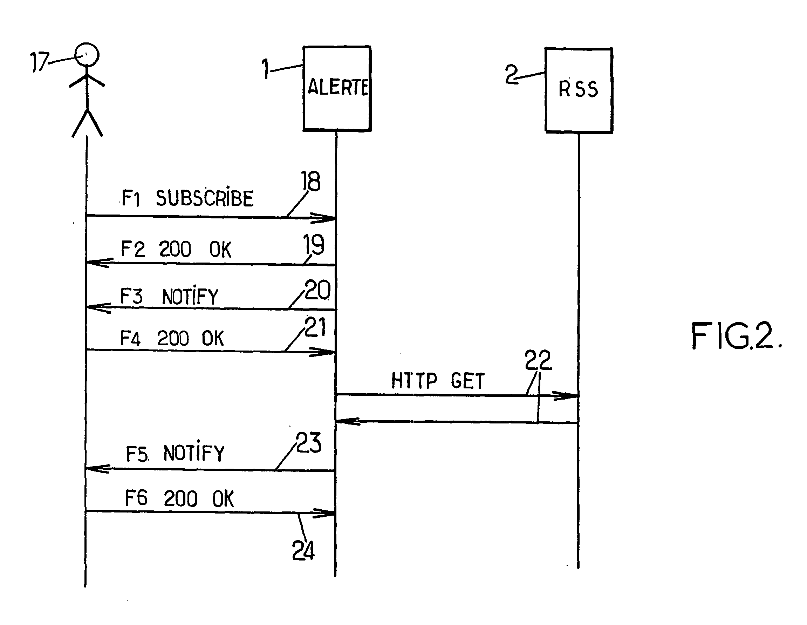

La figure 2 montre avec un peu plus de détail certains échanges mis en oeuvre lors de la souscription et la distribution de contenu conformément à un mode de réalisation de l'invention. Les échanges SIP liés à la présence, à la disponibilité et aux capacités des terminaux n'ont pas été représentés, car ils sont conformes au modèle SIP défini par 'l'IETF, notamment les RFC 3261 et 3265 précitées ainsi que la RFC 3856, "A Presence Event Package for the Session Initiation (SIP)", publiée en août 2004 par l'IETF. En particulier, le serveur d'alertes 1 joue les rôles de "registrar" et de "serveur de présence" tels que définis dans ce modèle. Cela lui permet de prendre les décisions concernant le routage des notifications et leur adaptation au terminal cible.

On constate sur la figure 2 que le message 18 de souscription (SUSCRIBE) et le message de notification 20 (NOTIFY) sont acquittés par l'utilisateur 17, via son terminal, et par le serveur d'alertes 1 respectivement (messages "OK" 19 et 21).

Un second message 23 de notification est transmis du serveur d'alertes 1 à l'utilisateur 17, après que le serveur 1 a reçu, depuis le serveur RSS 2, une information de mise à jour du contenu correspondant à la souscription. Ce second message 23 de notification fait également l'objet d'un acquittement 24.

Comme décrit ci-dessus, les messages 18, 20 et 23 de souscription et de notification RSS sont conformes à un paquetage événementiel spécifique. Le message 18 de souscription transmis au serveur d'alertes 1 contient un ou plusieurs identifiants URI pointant chacun vers une ressource RSS. Les messages 20 et 23 de notification transportent, quant à eux, le contenu RSS récupéré depuis le serveur 2.

Le message 18 de souscription peut par exemple comprendre les informations suivantes :

```
 F1 SUBSCRIBE subscriber->example.com server
 SUBSCRIBE sip:alerts@example.com SIP/2.0
 Via: SIP/2.0/UDP subscriberhost.example.com;branch=z9hG4bKnashds7
 To: <sip:alerts@example.com>
 From: <sip:user@example.com>;cag=xfg9
 Call-ID: 1564@subscriberhost.example.com
 CSeq: 19766 SUBSCRIBE
 Max-Forwards: 70
 Event: alerting
 Accept: application/rss+xml
 Contact: <sip:user@subscriberhost.example.com>
 Expires: 3600
 Content-Type: text/uri-list
 Content-Length: ...
 http://www.zdnet.fr/headlines.rss
```

De même, le message 20 de notification peut par exemple comprendre les informations suivantes :

```
 F3 NOTIFY example.com server-> subscriber
 NOTIFY sip:user@subcriberhost.example.com SIP/2.0
 Via: SIP/2.0/TCP server.example.com;branch=z9hG4bKna998sk
 From: <sip:alerts@exampl.com>;taq=ffd2
 To: <sip:user@example.com>;tag=xfg9
 Call-ID: 1564@subscriberhost.example.com
 Event: alerting
 Subscription-State: active;empires=599
 Max-Forwards: 70
 GSeq: 8775 NOTIFY
 Contact: sip:server.example.com
 Content-Type: application/rss+xml
 Content-Iength: ...
 <rss version="2.0">
 </rss>
```

Par ailleurs, on note que le modèle événementiel SIP repose sur une souscription temporaire et renouvelable. Il en résulte qu'une souscription à un flux RSS initiée depuis un client SIP n'est valide que pendant la durée d'activité de ce client. Si l'utilisateur souhaite changer de terminal, le client initial doit donc de préférence rester enregistré sur le réseau SIP et continuer à renouveler la ou les souscriptions actives.

Les principes décrits ci-dessus peuvent notamment être utilisés dans les champs d'application courants des technologies de syndication de contenu, tels que journaux personnels, actualités, information météorologique, information de trafic routier, agrégation de contenus provenant de sources différentes, etc.

En outre, la compatibilité des principes de l'invention avec le protocole SIP ouvre le champ à des applications mettant en oeuvre des synergies avec des clients de messagerie instantanée (Instant Messaging) ou de téléphonie SIP. A titre d'exemple, la notion de liste de contacts supportée par la plupart des logiciels de messagerie instantanée peut être utilisée pour gérer une souscription globale aux journaux personnels en ligne (weblogs) d'un groupe d'amis.

## Revendications

1. Procédé pour alerter un utilisateur (17) muni d'au moins un terminal (4;5;6;7) lors d'une modification d'un contenu conforme à une technologie de syndication de contenu dans un système de communication supportant un protocole d'initiation de session et de notification et incluant un serveur d'alertes (1) et un serveur de contenu (2), le procédé comprenant les étapes suivantes :
- transmettre, depuis un terminal (4) de l'utilisateur (17) vers le serveur d'alertes (1), un message de souscription (9;18) dudit protocole, ledit message de souscription identifiant un contenu conforme à ladite technologie de syndication de contenu stocké sur le serveur de contenu (2) ;
- recevoir au serveur d'alertes (1), depuis le serveur de contenu (2), une indication relative à une modification dudit contenu ; et
- transmettre un message de notification (11;20;23) dudit protocole audit utilisateur (17), depuis le serveur d'alertes (1), lorsque le serveur d'alertes a reçu une indication relative à une modification dudit contenu.

2. Procédé selon la revendication 1, dans lequel ledit message de notification (11;20;23) est transmis à l'utilisateur (17) par l'intermédiaire de l'un au moins de ses terminaux (4) et dans lequel ledit contenu est exploité par un lecteur de contenu conforme à la technologie de syndication de contenu au sein dudit terminal.

3. Procédé selon la revendication 1 ou 2, dans lequel ledit message de notification (11;20;23) est adapté à au moins un protocole supporté par au moins un des terminaux (4;5;6;7) de l'utilisateur (17).

4. Système de communication supportant un protocole d'initiation de session et de notification, ledit système comprenant un serveur d'alertes (1) apte à communiquer avec au moins un utilisateur (17) muni d'au moins un terminal (4;5;6;7) et un serveur de contenu (2) apte à stocker au moins un
contenu conforme à une technologie de syndication de contenu, le système de communication comprenant en outre :
- des moyens pour recevoir au serveur d'alertes, depuis un terminal (4) de l'utilisateur (17), un message de souscription (9;18) dudit protocole, ledit message de souscription identifiant un contenu conforme à ladite technologie de syndication de contenu stocké sur le serveur de contenu (2) ;
- des moyens pour recevoir au serveur d'alertes (1), depuis le serveur de contenu (2), une indication relative à une modification dudit contenu ; et
- des moyens pour transmettre un message de notification (11;20;23) dudit protocole audit utilisateur (17), depuis le serveur d'alertes (1), lorsque le serveur d'alertes a reçu une indication relative à une modification dudit contenu.

5. Système de communication selon la revendication 4, comprenant en outre des moyens pour adapter le message de notification (11;20;23) à au moins un protocole supporté par au moins un des terminaux (4;5;6;7) de l'utilisateur (17).

6. Serveur d'alerte (1) supportant un protocole d'initiation de session et de notification comprenant :
- des moyens pour recevoir depuis un terminal (4) d'un utilisateur (17), un message de souscription (9;18) dudit protocole, ledit message de souscription identifiant un contenu conforme à une technologie de syndication de contenu stocké sur un serveur de contenu (2) ;
- des moyens pour recevoir depuis le serveur de contenu (2), une indication relative à une modification dudit contenu ; et
- des moyens pour transmettre un message de notification (11;20;23) dudit protocole audit utilisateur (17) lorsque ledit serveur d'alertes a reçu une indication relative à une modification dudit contenu.

7. Programme d'ordinateur apte à être mis en oeuvre sur un serveur d'alertes (1) tel que défini dans la revendication 6, ledit programme d'ordinateur comprenant des instructions de code, qui, lorsqu'il est effectué sur ledit serveur d'alertes (1), réalise les étapes suivantes:
- recevoir depuis un terminal (4) d'un utilisateur (17), un message de souscription (9;18) dudit protocole, ledit message de souscription identifiant un contenu conforme à une technologie de syndication de contenu stocké sur un serveur de contenu (2) ;
- recevoir depuis le serveur de contenu (2), une indication relative à une modification dudit contenu ; et
- transmettre un message de notification (11;20;23) dudit protocole audit utilisateur (17) lorsque ledit serveur d'alertes a reçu une indication relative à une modification dudit contenu.

## Claims

1. Method for warning a user (17) provided with at least one terminal (4; 5; 6; 7) on modification of a content conforming to a content syndication technology in a communication system supporting a session initiation and notification protocol and including a warning server (1) and a content server (2), the method comprising the following steps:
- transmitting, from a terminal (4) of the user (17) to the warning server (1), a subscription message (9; 18) of said protocol, said subscription message identifying a content conforming to said content syndication technology stored on the content server (2);
- receiving on the warning server (1), from the content server (2), an indication relating to a modification of said content; and
- transmitting a notification message (11; 20; 23) of said protocol to said user (17), from the warning server (1), when the warning server has received an indication relating to a modification of said content.

2. Method according to Claim 1, in which said notification message (11; 20; 23) is transmitted to the user (17) via at least one of his terminals (4) and in which said content is used by a content reader conforming to the content syndication technology within said terminal.

3. Method according to Claim 1 or 2, in which said notification message (11; 20; 23) is adapted to at least one protocol supported by at least one of the terminals (4; 5; 6; 7) of the user (17).

4. Communication system supporting a session initiation and notification protocol, said system comprising a warning server (1) able to communicate with at least one user (17) provided with at least one terminal (4; 5; 6; 7) and a content server (2) able to store at least one content conforming to a content syndication technology, the communication system also comprising:
- means for receiving on the warning server, from a terminal (4) of the user (17), a subscription message (9; 18) of said protocol, said subscription message identifying a content conforming to said content syndication technology stored on the content server (2);
- means for receiving on the warning server (1), from the content server (2), an indication relating to a modification of said content; and
- means for transmitting a notification message (11; 20; 23) of said protocol to said user (17), from the warning server (1), when the warning server has received an indication relating to a modification of said content.

5. Communication system according to Claim 4, also comprising means for adapting the notification message (11; 20; 23) to at least one protocol supported by at least one of the terminals (4; 5; 6; 7) of the user (17).

6. Warning server (1) supporting a session initiation and notification protocol comprising:
- means for receiving, from a terminal (4) of a user (17), a subscription message (9; 18) of said protocol, said subscription message identifying a content conforming to a content syndication technology stored on a content server (2);
- means for receiving, from the content server (2), an indication relating to a modification of said content; and
- means for transmitting a notification message (11; 20; 23) of said protocol to said user (17) when said warning server has received an indication relating to a modification of said content.

7. Computer program able to be implemented on a warning server (1) as defined in Claim 6, said computer program comprising code instructions which, when run on said warning server (1), performs the following steps:
- receiving, from a terminal (4) of a user (17), a subscription message (9; 18) of said protocol, said subscription message identifying a content conforming to a content syndication technology stored on a content server (2);
- receiving, from the content server (2), an indication relating to a modification of said content; and
- transmitting a notification message (11; 20; 23) of said protocol to said user (17) when said warning server has received an indication relating to a modification of said content.

## Patentansprüche

1. Verfahren zur Warnung eines Benutzers (17), der mit mindestens einem Endgerät (4; 5; 6; 7) ausgestattet ist, bei einer Änderung eines Inhalts gemäß einer Technologie der Inhaltssyndizierung in einem Kommunikationssystem, das ein Sitzungsaufbau- und Benachrichtigungsprotokoll unterstützt und einen Warnserver (1) und einen Inhaltsserver (2) umfasst, wobei das Verfahren die folgenden Schritte enthält:
- Übertragung, ausgehend von einem Endgerät (4) des Benutzers (17), an den Warnserver (1) einer Abonnementmitteilung (9; 18) des Protokolls, wobei die Abonnementmitteilung einen Inhalt entsprechend der Technologie der Inhaltssyndizierung identifiziert, der im Inhaltsserver (2) gespeichert ist;
- Empfang im Warnserver (1), ausgehend vom Inhaltsserver (2), einer Angabe betreffend eine Änderung des Inhalts; und
- Übertragung einer Benachrichtigungsmitteilung (11; 20; 23) des Protokolls an den Benutzer (17), ausgehend vom Warnserver (1), wenn der Warnserver eine Angabe betreffend eine Änderung des Inhalts empfangen hat.

2. Verfahren nach Anspruch 1, bei dem die Benachrichtigungsmitteilung (11; 20; 23) an den Benutzer (17) über mindestens eines seiner Endgeräte (4) übertragen wird, und bei dem der Inhalt von einem Inhaltslesegerät gemäß der Technologie der Inhaltssyndizierung im Endgerät ausgewertet wird.

3. Verfahren nach Anspruch 1 oder 2, bei dem die Benachrichtigungsmitteilung (11; 20; 23) für mindestens ein Protokoll geeignet ist, das von mindestens einem der Endgeräte (4; 5; 6; 7) des Benutzers (17) unterstützt wird.

4. Kommunikationssystem, das ein Sitzungsaufbau- und Benachrichtigungsprotokoll unterstützt, wobei das System einen Warnserver (1), der mit mindestens einem Benutzer (17) kommunizieren kann, der mit mindestens einem Endgerät (4; 5; 6; 7) ausgestattet ist, und einen Inhaltsserver (2) enthält, der mindestens einen Inhalt entsprechend einer Technologie der Inhaltssyndizierung speichern kann, wobei das Kommunikationssystem außerdem enthält:
- Einrichtungen zum Empfang im Warnserver, ausgehend von einem Endgerät (4) des Benutzers (17), einer Abonnementmitteilung (9; 18) des Protokolls, wobei die Abonnementmitteilung einen Inhalt entsprechend der Technologie der Inhaltssyndizierung identifiziert, der im Inhaltsserver (2) gespeichert ist;
- Einrichtungen zum Empfang im Warnserver (1), ausgehend vom Inhaltsserver (2), einer Angabe betreffend eine Änderung des Inhalts; und
- Einrichtungen, um eine Benachrichtigungsmitteilung (11; 20; 23) des Protokolls an den Benutzer (17) ausgehend vom Warnserver (1) zu übertragen, wenn der Warnserver eine Angabe betreffend eine Änderung des Inhalts empfangen hat.

5. Kommunikationssystem nach Anspruch 4, das außerdem Einrichtungen enthält, um die Benachrichtigungsmitteilung (11; 20; 23) an mindestens ein Protokoll anzupassen, das von mindestens einem der Endgeräte (4; 5; 6; 7) des Benutzers (17) unterstützt wird.

6. Warnserver (1), der ein Sitzungsaufbau- und Benachrichtigungsprotokoll unterstützt, der enthält:
- Einrichtungen zum Empfang, ausgehend von einem Endgerät (4) eines Benutzers (17), einer Abonnementmitteilung (9; 18) des Protokolls, wobei die Abonnementmitteilung einen Inhalt entsprechend einer Technologie der Inhaltssyndizierung identifiziert, der im Inhaltsserver (2) gespeichert ist;
- Einrichtungen zum Empfang, ausgehend vom Inhaltsserver (2), einer Angabe betreffend eine Änderung des Inhalts; und
- Einrichtungen zur Übertragung einer Benachrichtigungsmitteilung (11; 20; 23) des Protokolls an den Benutzer (17), wenn der Warnserver eine Angabe betreffend eine Änderung des Inhalts empfangen hat.

7. Computerprogramm, das in einem Warnserver (1), wie er im Anspruch 6 definiert ist, durchgeführt werden kann, wobei das Computerprogramm Codeanweisungen enthält, das, wenn es im Warnserver (1) ausgeführt wird, die folgenden Schritte ausführt:
- Empfang, ausgehend von einem Endgerät (4) eines Benutzers (17), einer Abonnementmitteilung (9; 18) des Protokolls, wobei die Abonnementmitteilung einen Inhalt entsprechend einer Technologie der Inhaltssyndizierung identifiziert, der in einem Inhaltsserver (2) gespeichert ist;
- Empfang, ausgehend vom Inhaltsserver (2), einer Angabe betreffend eine Änderung des Inhalts; und
- Übertragung einer Benachrichtigungsmitteilung (11; 20; 23) des Protokolls an den Benutzer (17), wenn der Warnserver eine Angabe betreffend eine Änderung des Inhalts empfangen hat.
